Europäisches Patentamt

European Patent Office

Office européen des brevets

(19)

(11) Publication number: **0 149 828 B1**

(12) **EUROPEAN PATENT SPECIFICATION**

(45) Date of publication of patent specification: **13.03.91**  (51) Int. Cl.⁵: **C08F 297/08, C08L 53/00**

(21) Application number: **84115874.4**

(22) Date of filing: **19.12.84**

(54) Impact-resistant ethylene-propylene block copolymer and process for preparing such a block copolymer.

(30) Priority: **24.12.83 NL 8304439**

(43) Date of publication of application:
**31.07.85 Bulletin 85/31**

(45) Publicaticn of the grant of the patent:
**13.03.91 Bulletin 91/11**

(84) Designated Contracting States:
**AT BE DE FR GB IT NL SE**

(56) References cited:
**EP-A- 0 077 532**
**EP-A-00 948 18**
**FR-A- 2 377 432**
**GB-A- 970 478**
**LU-A- 58 434**

**CHEMICAL ABSTRACTS, vol. 79, 1973, page
55, no. 54505t, Columbus, Ohio, US**

**CHEMICAL ABSTRACTS, vol. 83, no. 16, 16th
October 1975, page 28, no. 132315e, Colum-
bus, Ohio, US**

(73) Proprietor: **STAMICARBON B.V.**
**Mijnweg 1**
**NL-6167 AC Geleen(NL)**

(72) Inventor: **Repin, Johannes Fredericus**
**Klingbemden 177**
**NL-6441 KX Brunssum(NL)**
Inventor: **Kisters, Mathijs Joseph M.G.**
**Molenweg 52**
**NL-6133 XN Sittard(NL)**

## Description

The invention relates to a novel impact-resistant ethylene-propylene block copolymer (C), comprising a homopolymeric propylene part consisting of at least 98% (wt) of propylene groups, and a copolymeric ethylene-propylene part, the weight ratio between the homopolymeric propylene part and the copolymeric ethylene-propylene part being from 3 : 2 up to a ratio of less than 4 : 1, preferably from 7 : 3 up to a ratio of less than 4:1, which contains a total amount of 14-20 % (wt) ethylene groups characterized in that its Izod value measured according to ISO-R-180 at 296 K is at least 30 kJ,m$^2$, preferably at least 40 kJ/m$^2$ and in particular at least 50 kJ/m$^2$, for instance 50-100 kJ/m$^2$, in that its E-modulus measured according to ASTM-D790 at 296 K is at least 900 N/mm$^2$, preferably at least 1000 N/mm$^2$, and in particular at least 1100 N/mm$^2$, for instance 1100-1300 N/mm$^2$, and in that its melt index measured according to ASTM-D-1238 at 503 K and 21.6 N is 4-20 dg/min, preferably 4-12 dg/min, particularly 4-9 dg/min.

The ethylene content is determined by means of IR analysis of the polymer in melted condition. The Izod value is determined on an injection-moulded test sheet and the E-modulus on a compression-moulded test sheet with a thickness of 1.6 mm. '

The homopolymeric propylene part is understood to mean a part of the block copolymer consisting of at least 98 % (wt) of propylene groups. The copolymeric ethylene-propylene part is understood to mean a part of the block copolymer consisting of at least 90 % (wt) substantially randomly distributed ethylene groups and propylene groups.

This very special combination of a high impact resistance, as well as a high rigidity, along with good flow properties has so far been unknown for ethylene-propylene block copolymers. Block copolymers similar to those of the invention are known from EP-A-94818 and EP-A-77532 but these prior art copolymers do not meet the impact properties in combination with the stiffness of the block copolymers of the present invention.

The impact-resistant ethylene-propylene block copolymer according to the invention preferably contains per 10$^6$ parts by weight block copolymer at least 50 parts by weight of one or more compounds of zinc and/or cadmium, calculated as zinc and/or cadmium atoms. Preference is given to the presence of zinc compounds. Very suitable zinc compounds in this connection are zinc stearate and zinc hexanoate.

The invention also comprises a process for preparing a impact-resistant ethylene-propylene block copolymer (C), characterized

in that in a first polymerization step a propylene prepolymer is prepared consisting of at least 98 % (wt) of propylene groups, having a melt index measured according to ASTM-D-1238 at 503 K and 21.6 N of 4-40 dg/min, preferably 5-15 dg/min,

in that in the presence of the propylene prepolymer (A) produced in the first polymerization step, ethylene and propylene are polymerized in a second polymerization step in such a manner that an ethylene-propylene block copolymer (B) is formed comprising a homopolymeric propylene part, consisting of at least 98% (wt) of propylene groups, and a copolymeric ethylene-propylene part, the weight ratio between the homopolymeric propylene part and the copolymeric ethylene-propylene part being 3 : 2 up to a ratio of less than 4 : 1, preferably from 7 : 3 up to a ratio of less than of less than 4 : 1, containing a total amount of 14-20 % (wt) ethylene groups, having a melt index measured according to ASTM-D-1238 at 503 K and 21.6 N of from 0.1 to 3.5 dg/min, preferably from 0.5 to 3.5 dg/min, and

in that the ethylene-propylene block copolymer (B) is subsequently subjected to a kneading treatment consisting of one or more kneading operations, which kneading treatment takes place in the presence of free radicals at a temperature of at least 450 K, preferably at 470-570 K.

A similar treatment is known from (CA Vol 79 (1973) p. 55 no. 54505 t.) However, this known treatment results in a deterioration of impact properties, whereas in the special combination of polymerisation steps and treatment according to the invention impact-and stiffness properties are improved.

The kneading treatment can be effected in various ways. It implies the exertion of mechanical forces on the starting ethylene-propylene block copolymer e.g. by means of a kneading and/or transport screw of e.g. extruding or injection-moulding equipment or by means of a rolling device. Preference is given to single-screw or multi-screw kneading, which kneading operation can be repeated more than once, and in which one or more of the kneading operations can be followed by extrusion. The duration of the kneading treatment is at least 1/4 minute, particularly at least 1 minute.

If the kneading treatment consists of more than one kneading operation, there may be a longer period of time between two kneading operations. Thus in first kneading operation a pre-product (for instance a granulate) can be prepared, subsequently be transported to another place and finally be processed in a second kneading operation according to the invention to form an end product according to the invention.

The presence of free radicals in the process according to the invention can be realized in any suitable manner. A suitable manner consists in the addition, before and/or during the said kneading treatment, of a total amount of 10-20000 parts by weight of one or more peroxides per $10^6$ parts by weight starting ethylene-propylene block copolymer to the substance or substances subjected or to be subjected to the kneading treatment. Preference is given to using peroxides having at the average temperature of a kneading operation a half time value less than 1/5 of the duration of the relative kneading treatment. Suitable peroxides are di-(t-butylperoxyisopropyl)-benzene, 1,1-di-t-butylperoxy-3,3,5-trimethylcyclohexane, 1,1-di-t-butylperoxycyclohexane, t-butylperoxyisopropylcarbonate, t-butylperoxybenzoate, di-cumylperoxide, di-t-butylperoxide, 2,2-di-t-butylperoxybutane, di-benzoylperoxide, 2,5-di-methylhexane-2,5-di-t-butylperoxide and 2,5-di-methylhexyn-2,5-di-t-butylperoxide.

Another suitable manner for realizing the presence of free radicals is the high-energy irradiation, for instance electron radiation or gamma radiation, of the starting ethylene-propylene block copolymer subjected or to be subjected to the kneading treatment, preferably in the almost complete absence of stabilizers, at a dose of 0.1-4 Mrad.

All kinds of combinations of the use of peroxides and of the said irradiation are suitable as well.

The kneading treatment according to the invention is preferably effected in whole or in part in the presence of at least 50 parts by weight of one or more zinc and/or cadmium compounds, calculated as zinc and/or cadmium atoms, per $10^6$ parts by weight starting ethylene-propylene block copolymer. Other additives, too, may be present or be added during this kneading tratment, for instance heat stabilizers, UV-stabilizers and nucleation agents.

Very suitable fillers for ethylene-propylene block copolymers according to the invention are chalk, with by preference an average particle size of below 2 μm, and talcum, with by preference an average particle size of below 5 μm. Suitable are quantities of filler of below 25 % (wt). A higher weight percentage filler quickly leads to very bad mechanical properties of the copolymer-filler mixture compared with the pure copolymers.

The impact-resistant ethylene-propylene block copolymers according to the invention are very suitable for use in car bumpers, front ends, spoilers, liners, motor car underside coats and wheel aroh lining for motor cars.

The invention is further elucidated by means of the following examples and the comparative experiment.

Example I

A homopolymeric propylene prepolymer having a melt index measured according to ASTM-D-1238 at 503 K and 21.6 N of 11.9 dg/min is produced. Subsequently ethylene and propylene are polymerized in the presence of this propylene prepolymer to form a powdery starting ethylene-propylene block copolymer with a weight ratio between the homopolymeric propylene part and the copolymeric ethylene-propylene part of 27 : 10, with a total content of ethylene groups of 15 % (wt) and with a melt index measured according to ASTM-D-1238 at 503 K and 21.6 N of 0.85 dg/min. This starting ethylene-propylene block copolymer is then provided with 0.05 % (wt) zinc stearate, 0.05 % (wt) calcium stearate, 0.1 % Irganox B 225 (a trade name and trade product of Ciba-Geigy) and 0.024 % (wt) di-(t-butylperoxyisopropyl)-benzene calculated in respect of the final mixture. The starting ethylene-propylene block copolymer provided with these additives is subsequently kneaded in a single-screw kneader at 523 K for 1.5 minutes and then extruded to form granulate.

This granulate has
- an Izod value measured according to ISO-R-180 at 296 K of 64.3 kJ/m$^2$,
- an E-modulus measured according to ASTM-D-790 at 296 K of 1170 N/mm$^2$, and
- a melt index measured according to ASTM-D-1238 at 503 K and 21.6 N of 5.4 dg/min.

Comparative experiment

A homopolymeric propylene prepolymer with a melt index measured according to ASTM-D-1238 at 503 K and 21.6 N of 64.6 dg/min is produced. Subsequently ethylene and propylene are polymerized in the presence of this propylene prepolymer to form a starting ethylene-propylene block copolymer with a weight ratio between the homopolymeric propylene part and the copolymeric ethylene-propylene part of 27 : 10, with a total content of ethylene groups of 15 % (wt) and with a melt index measured according to ASTM-D-1238 at 503 K and 21.6 N of 5.2 dg/min. This starting ethylene-propylene block copolymer is subsequently provided with 0.05 % (wt) zinc stearate, 0.05 % (wt) calcium stearate, 0.1 % (wt) Irganox B 225 (a trade name and trade product of Ciba-Geigy) calculated in respect of the final mixture. The starting ethylene-propylene block copolymer provided with these additives (now without peroxide) is subsequently kneaded in a single-screw at 523 K for 1.5 minutes and then extruded to form granulate.

This granulate has

- an Izod value measured according to ISO-R-180 at 296 K of only 20.8 kJ/m², 
- an E-modulus measured according to ASTM-D-790 at 296 K of 1100 N/mm², and 
- a melt index measured according to ASTM-D-1238 at 503 K and 21.6 N of 5.4 dg/min.

## Claims

1. Impact-resistant ethylene-propylene block copolymer (C), comprising a homopolymeric propylene part, consisting of at least 98% (wt) of propylene groups, and a copolymeric ethylene-propylene part, the weight ratio between the homopolymeric propylene part and the copolymeric ethylene-propylene part being from 3:2 up to a ratio of less than 4:1, which contains a total amount of 14-20 % (wt) ethylene groups, characterized in that its Izod value measured according to ISO-R-180 at 296 K is at least 30 kJ/m², in that its E-modulus measured according to ASTM-D-790 at 296 K is at least 900 N/mm² and in that its melt index measured according to ASTM-D-1238 at 503 K and 21.6 N is 4-20 dg/min.

2. Impact-resistant ethylene-propylene block copolymer according to claim 1, characterized in that the weight ratio between the homopolymeric propylene part and the copolymeric ethylene-propylene part is from 7 : 3 to 4 : 1.

3. Impact-resistant ethylene-propylene block copolymer according to claim 1 or 2, characterized in that the said melt index is 4-9 dg/min.

4. Process for preparing an impact-resistant ethylene-propylene block copolymer (C), characterized in that in a first polymerization step a propylene prepolymer (A) is prepared consisting of at least 98 % (wt) of propylene groups, having a melt index measured according to ASTM-D-1238 at 503 K and 21.6 N of 4-40 dg/min,

    in that in the presence of the propylene prepolymer (A) produced in the first polymerization step ethylene and propylene are polymerized in a second polymerization step in such a manner that an ethylene-propylene block copolymer (B) is formed comprising a homopolymeric propylene part, consisting of at least 98% (wt) of propylene groups, and a copolymeric ethylene-propylene part, the weight ratio between the homopolymeric propylene part and the copolymeric ethylene-propylene part being from 3 : 2 up to a ratio of less than 4 : 1, containing a total amount of 15-20 % (wt) ethylene groups and having a melt index measured according to ASTM-D-1238 at 503 K and 21.6 N of 0.1-3.5 dg/min, and

    in that this ethylene-propylene block copolymer (B) is subsequently subjected to a kneading treatment consisting of one or more kneading operations, which kneading treatment takes place in the presence of free radicals at a temperature of at least 450 K.

5. Process according to claim 4, characterized in that in the first polymerization step a propylene prepolymer (A) is produced having a melt index measured according to ASTM-D-1238 at 503 K and 21.6 N of 5-15 dg/min.

6. Process according to claim 4 or 5, characterized in that in the second polymerization step an ethylene-propylene block copolymer (B) is produced having a melt index measured according to ASTM-D-1238 at 503 K and 21.6 N of 0.5-3.5 dg/min.

7. Process according to any one of claims 4-6, characterized in that in the second polymerization step an ethylene-propylene block copolymer (B) is produced of which the weight ratio between homopolymeric propylene part and the copolymeric ethylene-propylene part is from 7 : 3 up to a ratio of less than 4 : 1.

8. Process according to any one of claims 4-7, characterized in that before and/or during the said kneading treatment 10-20000 parts by weight of one or more peroxides per 10⁶ parts by weight ethylene-propylene block copolymer (B) is added to the substance or substances subjected or to be subjected to the kneading treatment.

9. Process according to any one of claims 4-8, characterized in that the ethylene-propylene block copolymer (B) subjected or to be subjected to the kneading treatment is subjected to high-energy irradiation, with a preferred irradiation dose opf 0.1-4 Mrad.

10. Article wholly or partly made from an impact-resistant ethylene-propylene block copolymer (C) according to any one of claims 1-3.

CLAIMS FOR The Contracting State AT:

1. Process for preparing an impact-resistant ethylene-propylene block copolymer (C), characterized in that in a first polymerization step a propylene prepolymer (A) is prepared consisting of at least 98 % (wt) of propylene groups, having a melt index measured according to ASTM-D-1238 at 503 K and 21.6 N of 4-40 dg/min,

in that in the presence of the propylene prepolymer (A) produced in the first polymerization step ethylene and propylene are polymerized in a second polymerization step in such a manner that an ethylene-propylene block copolymer (B) is formed comprising a homopolymeric propylene part, consisting of at least 98% (wt) of propylene groups, and a copolymeric ethylene-propylene part, the weight ratio between the a homopolymeric propylene part and the copolymeric ethylene-propylene part being from 3 : 2 up to a ratio of less than 4 : 1, containing a total amount of 15-20 % ethylene groups and having a melt index measured according to ASTM-D-1238 at 503 K and 21.6 N of 0.1-3.5 dg/min, and

in that the ethylene-propylene block copolymer (B) is subsequently subjected to a kneading treatment consisting of one or more kneading operations, which kneading treatment takes place in the presence of free radicals at a temperature of at least 450 K.

2. Process according to claim 1, characterized in that in the first polymerization step a propylene prepolymer (A) is produced having a melt index measured according to ASTM-D-1238 at 503 K and 21.6 N of 5-15 dg/min.

3. Process according to claim 1 or 2, characterized in that in the second polymerization step an ethylene-propylene block copolymer (B) is produced having a melt index measured according to ASTM-D-1238 at 503 K and 21.6 N of 0.5-3.5 dg/min.

4. Process according to any one of claims 1-3, characterized in that in the second polymerization step an ethylene-propylene block copolymer (B) is produced in which the weight ratio between the homopolymeric propylene part and the copolymeric ethylene-propylene part is from 7 : 3 up to a ratio of less than 4 : 1.

5. Process according to any one of claims 1-4, characterized in that before and/or during the said kneading treatment 10-20000 parts by weight of one or more peroxides per $10^6$ parts by weight ethylene-propylene block copolymer (B) is added to the substance or substances subjected or to be subjected to the kneading treatment.

6. Process according to any one of claims 1-5, characterized in that the ethylene-propylene block copolymer (B) subjected or to be subjected to the kneading treatment is subjected to high-energy irradiation, with a preferred irradiation dose opf 0.1-4 Mrad.

7. Impact-resistant ethylene-propylene block copolymer prepared according to a process according to any one of the claim 1-6.

8. Article wholly or partly made from an impact-resistant ethylene-propylene block copolymer (C) according to claim 7.

**Revendications**

1. Copolymère séquencé éthylène/propylène résistant au choc (C) comprenant une portion propylène homopolymère consistant en au moins 98% en poids de groupes propylène et une portion copolymère éthylène/propylène, le rapport pondéral de la portion propylène homopolymère à la portion copolymère éthylène/propylène étant compris entre 3:2 et une valeur inférieure à 4:1, contenant au total 14 à 20% en poids de groupes éthylène, caractérisé en ce que sa valeur Izod mesurée selon Iso-R-180 à 296 K est d'au moins 30 kJ/$m^2$ , en ce que son module E mesuré selon ASTM D 790 à 296 K est d'au moins 900 N/$mm^2$ et en ce que son indice de fusion (melt index) mesuré selon ASTM D 1238 à 503 K et 21,6 N est de 4 à 20 dg/min.

2. Copolymère séquencé éthylène/propylène résistant au choc selon la revendication 1, caractérisé en ce que le rapport pondéral de la portion propylène homopolymère à la portion copolymère éthylène/propylène vaut de 7:3 à 4:1.

3. Copolymère séquencé éthylène/propylène résistant au choc selon la revendication 1 ou 2, caractérisé en ce que ledit indice de fusion est de 4 à 9 dg/min.

4. Procédé de préparation d'un copolymère séquencé éthylène/propylène résistant au choc (C), caractérisé en ce que dans un premier stade de polymérisation, on prépare un prépolymère de propylène (A) contenant au moins 98% en poids de groupes propylène, ayant un indice de fusion mesuré selon ASTM-D-1238 à 304 K et 21,6 N de 4 à 40 dg/min ; en ce qu'en présence du prépolymère de propylène (A) obtenu dans le premier stade de polymérisation, on polymérise de l'éthylène et du propylène dans un second stade de polymérisation, de manière à former un copolymère séquencé éthylène/propylène (B) comprenant une portion propylène homopolymère consistant en au moins 98% en poids de groupes propylène et une portion copolymère éthylène/propylène, le rapport pondéral de la portion homopolymère propylène à la portion copolymère éthylène/propylène étant compris entre 3:2 et une valeur inférieure à 4:1, contenant au total 15 à 20% en poids de groupes éthylène et ayant un indice de fluidité à l'état fondu mesuré selon ASTM-D 1238 à 503 K et 21,6 N de 0,1 à 3,5 dg/min ; et en ce qu'on soumet ultérieurement le copolymère séquencé éthylène/propylène (B) à un traitement de malaxage comprenant une ou plusieurs opération(s) de malaxage, ce traitement de malaxage ayant lieu en présence de radicaux libres à une température d'au moins 450 K.

5. Procédé selon la revendication 4, caractérisé en ce qu'au premier stade de polymérisation, on produit un prépolymère de propylène (A) ayant un indice de fusion mesuré selon ASTM-D-1238 à 503 K et 21,6 N de 5 à 15 dg/min.

6. Procédé selon la revendication 4 ou 5, caractérisé en ce qu'au second stade de polymérisation, on produit un copolymère séquencé éthylène/propylène (B) ayant un indice de fusion mesuré selon ASTM-D 1238 à 503 K et 21,6 N de 0,5 à 3,5 dg/min.

7. Procédé selon l'une quelconque des revendications 4 à 6, caractérisé en ce que dans le second stade de polymérisation, on produit un copolymère séquencé éthylène/ propylène (B) dans lequel le rapport pondéral de la portion homopolymère propylène à la portion copolymère éthylène/ propylène est comprise entre 7:1 et une valeur inférieure à 4:1.

8. Procédé selon l'une quelconque des revendications 4 à 7, caractérisé en ce qu'avant et/ou pendant ledit traitement de malaxage, on ajoute de 10 à 20000 parties en poids d'un (ou plusieurs) peroxyde par $10^6$ parties en poids de copolymère séquencé éthylène/propylène (B), à la substance ou aux substances ayant subi ou devant subir le traitement de malaxage.

9. Procédé selon l'une quelconque des revendications 4 à 8, caractérisé en ce qu'on soumet le copolymère séquencé éthylène/propylène (B) ayant subi ou devant subir le traitement de malaxage à une irradiation haute énergie, le dosage préféré d'irradiation étant de 0,1 à 4 Mrad.

10. Article préparé en totalité ou en partie à partir d'un copolymère séquencé éthylène/propylène (C) résistant au choc selon l'une quelconque des revendications 1 à 3.

REVENDICATIONS POUR L'ETAT CONTRACTANT: AT

1. Procédé de préparation d'un copolymère séquencé éthylène/propylène résistant au choc (C) , caractérisé en ce que dans un premier stade de polymérisation, on prépare un prépolymère de propylène (A) contenant au moins 98% en poids de groupes propylène, ayant un indice de fusion (melt index) mesuré selon ASTM-D-1238 à 503 K et 21,6 N de 4 à 40 dg/min ;
en ce qu'en présence du prépolymère de propylène (A) obtenu dans le premier stade de polymérisation, on polymérise de l'éthylène et du propylène dans un second stade de polymérisation, de manière à former un copolymère séquencé éthylène/propylène (B) comprenant une portion propylène homopolymère consistant en au moins 98% en poids de groupes propylène et une portion copolymère éthylène/propylène, le rapport pondéral de la portion homopolymère propylène à la portion copolymère éthylène/propylène étant comprise entre 3:2 et une valeur inférieure à 4:1, contenant au total 15 à 20% en poids de groupes éthylène et ayant un indice de fusion mesuré selon ASTM-D 1238 à 503 K et 21,6 N de 0,1 à 3,5 dg/min ; et
en ce qu'on soumet ultérieurement le copolymère séquencé éthylène/propylène (B) à un traitement de malaxage comprenant une ou plusieurs opération(s) de malaxage, ce traitement de malaxage ayant lieu en présence de radicaux libres à une température d'au moins 450 K.

2. Procédé selon la revendication 1, caractérisé en ce qu'au premier stade de polymérisation, on produit un prépolymère de propylène (A) ayant un indice de fusion mesuré selon ASTM-D 1238 à 503 K et 21,6 N de 5 à 15 dg/min.

3. Procédé selon la revendication 1 ou 2, caractérisé en ce qu'au second stade de polymérisation, on obtient un copolymère séquencé éthylène/propylène (B) ayant un indice de fusion mesuré selon ASTM-D 1238 à 503 K et 21,6 N de 0,5 à 3,5 dg/min.

4. Procédé selon l'une quelconque des revendications 1 à 3, caractérisé en ce qu'au second stade de polymérisation, on obtient un copolymère séquencé éthylène/ propylène (B) dans lequel le rapport pondéral entre la portion homopolymère propylène et la portion éthylène/ propylène copolymère est compris entre 7:3 et une valeur inférieure à 4:1.

5. Procédé selon l'une quelconque des revendications 1 à 4, caractérisé en ce qu'avant et/ou pendant ledit traitement de malaxage, on ajoute 10 à 20000 parties en poids d'un (ou plusieurs) peroxydes par $10^6$ parties en poids de copolymère séquencé éthylène/propylène (B) à la substance ou aux substances soumise ou devant être soumise au traitement de malaxage.

6. Procédé selon l'une quelconque des revendications 1 à 5, caractérisé en ce qu'on soumet à une irradiation haute énergie le copolymère séquencé éthylène/ propylène (B) soumis ou devant être soumis au traitement de de malaxage, la dose préférée d'irradiation étant de 0,1 à 4 Mrad.

7. Copolymère séquencé éthylène/propylène résistant au choc préparé par un procédé selon l'une quelconque des revendications 1 à 6.

8. Article fabriqué en totalité ou en partie à partir d'un copolymère séquencé éthylène/propylène résistant au choc (C) selon la revendication 7.

**Ansprüche**

1. Schlagfestes Äthylen-Propylenblockcopolymer (C), das einen homopolymeren Propylenteil bestehend aus mindestens 98 % (Gew.) Propylengruppen und einen copolymeren Äthylen-Propylenteil umfaßt, wobei das Gewichtsverhältnis zwischen dem homopolymeren Propylenteil und dem copolymeren Äthylen-Propylenteil 3 : 2 bis zu einem Verhältnis von weniger als 4 : 1 beträgt, das eine Gesamtmenge von 14 bis 20 % (Gew.) Äthylengruppen enthält, dadurch gekennzeichnet, daß seine Schlagzahl, gemessen gemäß ISO-R-180 bei 296 K, mindestens 30 kJ/m² beträgt, daß sein E-Modul, gemessen gemäß ASTM-D-790 bei 296 K, mindestens 900 N/mm² ist und daß sein Schmelzindex, gemessen gemäß ASTM-D-1238 bei 503 K und 21,6 N, 4 bis 20 dg/min ist.

2. Schlagfestes Äthylen-Propylenblockcopolymer nach Anspruch 1, dadurch gekennzeichnet, daß das Gewichtsverhältnis zwischen dem homopolymeren Propylenteil und dem copolymeren Äthylen-Propylenteil 7 : 3 bis 4 : 1 beträgt.

3. Schlagfestes Äthylen-Propylenblockcopolymer nach Anspruch 1, dadurch gekennzeichnet, daß der Schmelzindex 4 bis 9 dg/min beträgt.

4. Verfahren zum Herstellen eines schlagfesten Äthylen-Propylenblockcopolymers (C), dadurch gekennzeichnet,

daß in einem ersten Polymerisationsschritt ein Propylenpräpolymer hergestellt wird, das aus mindestens 98 % (Gew.) Propylengruppen besteht und einen Schmelzindex, gemessen gemäß ASTM-D-1238 bei 503 K und 21,6 N, von 4 bis 40 dg/min aufweist,

daß in Anwesenheit des im ersten Polymerisationsschritt hergestellten Propylenpräpolymers (A) Äthylen und Propylen in einem zweiten Polymerisationsschritt auf solche Weise polymerisiert werden, daß ein Äthylen-Propylenblockcopolymer (B) gebildet wird, das einen homopolymeren Propylenteil bestehend aus mindestens 98 % (Gew.) Propylengruppen und einen copolymeren Äthylen-Propylenteil umfaßt, wobei das Gewichtsverhältnis zwischen dem homopolymeren Propylenteil und dem copolymeren Äthylen-Propylenteil 3 : 2 bis zu einem Verhältnis von weniger als 4 : 1 beträgt, das eine Gesamtmenge von 15 bis 20 % (Gew.) Äthylengruppen enthält und einen Schmelzindex, gemessen gemäß ASTM-D-1238 bei 503 K und 21,6 N, von 0,1 bis 3,5 dg/min aufweist, und

daß das Äthylen-Propylenblockcopolymer (B) anschließend einer Knetbehandlung bestehend aus einem oder mehreren Knetvorgängen unterworfen wird, welche Knetbehandlung in Anwesenheit von freien Radikalen bei einer Temperatur von mindestens 450 K erfolgt.

5. Verfahren nach Anspruch 4, dadurch gekennzeichnet, daß im ersten Polymerisationsschritt ein Propylenpräpolymer (A) mit einem Schmelzindex, gemessen gemäß ASTM-D-1238 bei 503 K und 21,6 N, von 5 bis 15 dg/min hergestellt wird.

6. Verfahren nach Anspruch 4 oder 5, dadurch gekennzeichnet, daß im zweiten Polymerisationsschritt ein Äthylen-Propylenblockcopolymer (B) mit einem Schmelzindex, gemessen gemäß ASTM-D-1238 bei 503 K und 21,6 N, von 0,5 bis 3,5 dg/min hergestellt wird.

7. Verfahren nach einem der Ansprüche 4 bis 6, dadurch gekennzeichnet, daß im zweiten Polymerisationsschritt ein Äthylen-Propylenblockcopolymer (B) hergestellt wird, in dem das Gewichtsverhältnis zwischen dem homopolymeren Propylenteil und dem copolymeren Äthylen-Propylenteil 7 : 3 bis zu einem Verhältnis von weniger als 4 : 1 beträgt.

8. Verfahren nach einem der Ansprüche 4 bis 7, dadurch gekennzeichnet, daß vor und/oder während der Knetbehandlung 10 bis 20 000 Gew.Teile eines oder mehrerer Peroxide pro $10^6$ Gew.Teile Äthylen-Propylenblockcopolymer (B) der Substanz oder den Substanzen, die der Knetbehandlung unterworfen werden oder unterworfen werden sollen, zugesetzt werden.

9. Verfahren nach einem der Ansprüche 4 bis 8, dadurch gekennzeichnet, daß das Äthylen-Propylenblockcopolymer (B), das der Knetbehandlung unterworfen wird oder unterworfen werden soll, Hochenergiebestrahlung mit einer bevorzugten Bestrahlungsdosis von 0,1 bis 4 Mrad ausgesetzt wird.

10. Gegenstand, der zur Gänze oder zum Teil aus einem schlagfesten Äthylen-Propylenblockcopolymer (C) nach einem der Ansprüche 1 bis 3 hergestellt ist.


Patentansprüche für den Vertragsstaat AT

1. Verfahren zum Herstellen eines schlagfesten Äthylen-Propylenblockcopolmers (C), dadurch gekennzeichnet, daß in einem ersten Polymerisationsschritt ein Propylenpräpolymer hergestellt wird, das aus mindestens 98 % (Gew.) Propylengruppen besteht und einen Schmelzindex, gemessen gemäß ASTM-D-1238 bei 503 K und 21,6 N, von 4 bis 40 dg/min aufweist,

daß in Anwesenheit des im ersten Polymerisationsschritt hergestellten Propylenpräpolymers (A) Äthylen und Propylen in einem zweiten Polymerisationsschritt auf solche Weise polymerisiert werden, daß ein Äthylen-Propylenblockcopolymer (B) gebildet wird, das einen homopolymeren Propylenteil bestehend aus mindestens 98 % (Gew.) Propylengruppen und einen copolymeren Äthylen-Propylenteil umfaßt, wobei das Gewichtsverhältnis zwischen dem homopolymeren Propylenteil und dem copolymeren Äthylen-Propylenteil 3 : 2 bis zu einem Verhältnis von weniger als 4 : 1 beträgt, das eine Gesamtmenge von 15 bis 20 % (Gew.) Äthylengruppen enthält und einen Schmelzindex, gemessen gemäß ASTM-D-1238 bei 503 K und 21,6 N, von 0,1 bis 3,5 dg/min aufweist, und

daß das Äthylen-Propylenblockcopolymer (B) anschließend einer Knetbehandlung bestehend aus einem oder mehreren Knetvorgängen unterworfen wird, welche Knetbehandlung in Anwesenheit von freien Radikalen bei einer Temperatur von mindestens 450 K erfolgt.

2. Verfahren nach Anspruch 1, dadurch gekennzeichnet, daß im ersten Polymerisationsschritt ein Propylenpräpolymer (A) mit einem Schmelzindex, gemessen gemäß ASTM-D-1238 bei 503 K und 21,6 N, von 5 bis 15 dg/min hergestellt wird.

3. Verfahren nach Anspruch 1 oder 2, dadurch gekennzeichnet, daß im zweiten Polymerisationsschritt ein Äthylen-Propylenblockcopolymer (B) mit einem Schmelzindex, gemessen gemäß ASTM-D-1238 bei 503 K und 21,6 N, von 0,5 bis 3,5 dg/min hergestellt wird.

4. Verfahren nach einem der Ansprüche 1 bis 3, dadurch gekennzeichnet, daß im zweiten Polymerisationsschritt ein Äthylen-Propylenblockcopolymer (B) hergestellt wird, in dem das Gewichtsverhältnis zwischen dem homopolymeren Propylenteil und dem copolymeren Äthylen-Propylenteil 7 : 3 bis zu einem Verhältnis von weniger als 4 : 1 beträgt.

5. Verfahren nach einem der Ansprüche 1 bis 4, dadurch gekennzeichnet, daß vor und/oder während der Knetbehandlung 10 bis 20 000 Gew.Teile eines oder mehrerer Peroxide pro $10^6$ Gew.Teile Äthylen-Propylenblockcopolymer (B) der Substanz oder den Substanzen, die der Knetbehandlung unterworfen werden oder unterworfen werden sollen, zugesetzt werden.

6. Verfahren nach einem der Ansprüche 1 bis 5, dadurch gekennzeichnet, daß das Äthylen-Propylenblockcopolymer (B), das der Knetbehandlung unterworfen wird oder unterworfen werden soll, Hochenergiebestrahlung mit einer bevorzugten Bestrahlungsdosis von 0,1 bis 4 Mrad ausgesetzt wird.

7. Schlagfestes Äthylen-Propylenblockcopolymer, hergestellt nach einem Verfahren nach einem der Ansprüche 1 bis 6.

8. Gegenstand, der zur Gänze oder zum Teil aus einem schlagfesten Äthylen-Propylenblockcopolymer (C) nach Anspruch 7 hergestellt ist.